# EUROPÄISCHE PATENTANMELDUNG

(11) **EP 4 759 474 A1**
(43) Veröffentlichungstag der Anmeldung: **17.06.2026**
(21) Anmeldenummer: 25196874.9
(22) Anmeldetag: 19.08.2025
(51) Int. Cl.: B23K 26/55

(54) **VERFAHREN UND VORRICHTUNG ZUM SPÜLEN EINER ABTRAGSFRONT**

(30) Priorität: 24.09.2024 DE 102024209193
(71) Anmelder: Carl Zeiss SMT GmbH, 73447 Oberkochen (DE)
(72) Erfinder: BIELKE, Uwe, 73447 Oberkochen (DE); DAUTH, Markus, 73447 Oberkochen (DE); FAAS, Sebastian, 73447 Oberkochen (DE); PATRA, Michael, 73447 Oberkochen (DE); RUCK, Simon, 73447 Oberkochen (DE); SEIFERT, Andreas, 73447 Oberkochen (DE); ZIPFEL, Jonas, 73447 Oberkochen (DE); MOELLER, Caren, 73447 Oberkochen (DE); MYSLIWITZ, Eric, 73447 Oberkochen (DE)
(74) Vertreter: Kohler Schmid Möbus Patentanwälte

(57) **Zusammenfassung**

Die Erfindung betrifft ein Verfahren zum Spülen einer Abtragsfront (4) an einer durch materialabtragende Bearbeitung gebildeten Hohlstruktur (2) in einem Werkstück, bevorzugt in einem Substrat für einen EUV-Spiegel, umfassend: Zuführen eines Fluids (6) zu der Abtragsfront (4) mittels einer bevorzugt flexiblen Fluidzuführung (7). Bei dem Verfahren weist die Fluidzuführung (7) zum Zuführen des Fluids (6) zu der Abtragsfront (4) und/oder zum Abführen des Fluids (6) von der Abtragsfront (4) mindestens eine in mindestens einer Raumrichtung periodische Außenstruktur, bevorzugt eine helixförmige Außenstruktur (9a,b) auf. Die Erfindung betrifft auch eine zugehörige Vorrichtung zum Spülen einer Abtragsfront (4).

## Beschreibung

### Bezugnahme auf verwandte Anmeldung

Diese Anmeldung beansprucht die Priorität der deutschen Patentanmeldung DE 102024209193.6 vom 24. September 2024, deren gesamter Offenbarungsgehalt durch Bezugnahme zum Inhalt dieser Anmeldung gemacht wird.

### Hintergrund der Erfindung

Die Erfindung betrifft ein Verfahren zum Spülen einer Abtragsfront an einer durch materialabtragende, typischerweise kontaktlose Bearbeitung gebildeten Hohlstruktur in einem Werkstück, bevorzugt in einem Substrat für einen EUV-Spiegel, das Verfahren umfassend: Zuführen eines Fluids zu der Abtragsfront mittels einer bevorzugt flexiblen Fluidzuführung. Die Erfindung betrifft auch eine Vorrichtung zum Spülen einer Abtragsfront an einer durch materialabtragende Bearbeitung gebildeten Hohlstruktur in einem Werkstück, bevorzugt in einem Substrat für einen EUV-Spiegel, umfassend: eine bevorzugt flexible Fluidzuführung zur Zuführung eines Fluids zu der Abtragsfront. Bei dem Material des Werkstücks handelt es sich typischerweise um Glas oder um eine Glaskeramik.

Die WO2023/0110816A2 beschreibt ein Verfahren zum Erzeugen einer Hohlstruktur in einem Werkstück in Form eines Substrats für einen Spiegel durch materialabtragende Bearbeitung mittels gepulster Laserstrahlung. Bei dem Verfahren wird eine Abtragsfront gebildet, die beim Erzeugen der Hohlstruktur innerhalb des Werkstücks bewegt und in Kontakt mit einem Fluid gebracht bzw. mit einem Fluid gespült wird. Das Fluid wird dazu verwendet, die bei der materialabtragenden Bearbeitung entstehenden Ablationsprodukte durch einen permanenten Fluidstrom in ausreichender Anzahlkonzentration von der Abtragsfront abzutransportieren und einen homogenen Abtrag zu gewährleisten. Bei der Bewegung der Abtragsfront in dem Werkstück wird das Fluid der Abtragsfront mittels einer Fluidzuführung nachgeführt, die zumindest teilweise in die Hohlstruktur eingeführt wird. Die Fluidzuführung kann eine flexible Fluidleitung aufweisen.

Die Hohlstruktur, durch welche die flexible Fluidleitung geführt wird, um die Abtragsfront zu spülen, kann Krümmungen und/oder Kurven aufweisen, um bei der Durchströmung mit einem Temperiermedium, beispielsweise in Form von Wasser, im Betrieb des EUV-Spiegels eine optimale Performance zu erzielen. Die Querschnitte von Hohlstrukturen, die in Form von Temperierkanälen ausgebildet sind, liegen in der Regel in der Größenordnung von wenigen Millimetern. Die flexiblen, typischerweise schlauchförmigen Fluidleitungen, die in solche Temperierkanäle eingeführt werden, benötigen eine ausreichende Steifigkeit, um longitudinal gefördert zu werden. Auch ist es typischerweise erforderlich, dass die Fluidleitungen flexibel genug sind, um durch die ggf. vorhandenen Krümmungen und Kurven der Hohlstruktur geführt zu werden. Jede Krümmung sowie die Länge und Rauheit der Temperierkanäle stellt eine Herausforderung für die Nachführung der flexiblen Fluidleitung dar, da es zum Abknicken, Feststecken sowie zu Beschädigungen an der flexiblen Fluidleitung kommen kann. Dies kann zu einer unzureichenden Spülung der Abtragsfront sowie ggf. zu erzwungenen Prozessabbrüchen oder zu Bauteilbeschädigungen führen.

Aus den obengenannten Gründen hat es sich als schwierig herausgestellt, die Fluidzuführung, insbesondere in Form einer flexiblen Fluidleitung, der Abtragsfront innerhalb des Werkstücks nachzuführen. Für den Fall, dass über die Fluidzuführung das Fluid nicht nur der Abtragsfront zugeführt, sondern dieses auch von der Abtragsfront abgeführt wird, kann es zudem zu einer Verstopfung der Fluidzuführung durch größere Ablationsprodukte, z.B. in der Art von Schollen oder dergleichen, kommen.

### Aufgabe der Erfindung

Aufgabe der Erfindung ist es, die Effizienz und/oder die Zuverlässigkeit eines Verfahrens und einer Vorrichtung zum Spülen einer Abtragsfront zu verbessern.

### Gegenstand der Erfindung

Diese Aufgabe wird gemäß einem ersten Aspekt gelöst durch ein Verfahren der eingangs genannten Art, bei dem die Fluidzuführung zum Zuführen des Fluids zu der Abtragsfront und/oder zum Abführen des Fluids von der Abtragsfront mindestens eine in mindestens einer Raumrichtung periodische Außenstruktur, bevorzugt eine helixförmige Außenstruktur, aufweist.

Die Erfinder haben erkannt, dass eine Fluidzuführung mit einer Außenstruktur, die in mindestens einer Raumrichtung periodisch ist, insbesondere mit einer helixförmigen Außenstruktur, der Abtragsfront leichter nachgeführt werden kann als dies bei einer Fluidzuführung der Fall ist, die in der Art eines Schlauchs mit einer glatten Außengeometrie bzw. einer glatten Mantelfläche ausgebildet ist. Zudem kann die mindestens eine in mindestens einer Raumrichtung periodische Außenstruktur dazu verwendet werden, das Fluid der Abtragsfront zuzuführen und/oder das Fluid von der Abtragsfront wegzuführen.

Bei einer Variante weist die Fluidzuführung einen bevorzugt massiven Kern auf, der von der mindestens einen periodischen Außenstruktur umgeben ist. Der Kern, der beispielsweise in der Art eines steifen Drahts oder ggf. in Form eines Schlauchs oder dergleichen ausgebildet sein kann, kann als stabiles Grundgerüst dienen, welches das Einführen der Fluidzuführung in die Hohlstruktur vereinfacht und gegenüber einer flexiblen Fluidleitung ohne ein solches Grundgerüst verbessert. Die periodische, insbesondere helixförmige Außenstruktur vereinfacht bzw. verbessert ebenfalls die Nachführung bzw. die Einführung der Fluidzuführung in die Hohlstruktur. Die Verwendung einer helixförmigen Außenstruktur ermöglicht insbesondere ein Eindrehen der Fluidzuführung in die Hohlstruktur.

Bei einer Weiterbildung dieser Variante ist der Kern von mindestens zwei periodischen Außenstrukturen umgeben, mit denen das Fluid der Abtragsfront zugeführt und von der Abtragsfront abgeführt wird. In diesem Fall wird das Fluid nicht in dem Kern geführt, vielmehr erfolgt die Zuführung des Fluids zu der Abtragsfront und auch die Abführung des Fluids von der Abtragsfront mit Hilfe der mindestens zwei periodischen, insbesondere helixförmigen Außenstrukturen. Die Fluidzuführung kann insbesondere genau zwei helixförmige Außenstrukturen aufweisen, die eine Doppelhelix bilden und eine Trennung zwischen der Zuführung und der Abführung des Fluids ermöglichen.

Bei einer Weiterbildung dieser Variante sind die helixförmigen Außenstrukturen stegförmig ausgebildet und trennen mindestens einen ersten wendelförmigen Kanal, über den das Fluid der Abtragsfront zugeführt wird, von mindestens einem zweiten wendelförmigen Kanal, über den das Fluid von der Abtragsfront abgeführt wird. Durch die stegförmigen helix- bzw. spiralförmigen Außenstrukturen können zwei oder ggf. mehr wendelförmige, d.h. schraubenförmig gewundene Kanäle voneinander getrennt werden, um auf diese Weise das der Abtragsfront zugeführte Fluid von dem von der Abtragsfront abgeführten Fluid zu trennen. Die wendelförmigen Kanäle zwischen den stegförmigen helixförmigen Außenstrukturen können durch einen Mantel an der Außenseite der Fluidzuführung gegenüber der Umgebung abgeschlossen sein, dies ist aber nicht zwingend erforderlich. Die stegförmigen helixförmigen Außenstrukturen können beispielsweise aus einem Kunststoffmaterial hergestellt sein.

Bei einer Weiterbildung sind die wendelförmigen Kanäle zur Außenseite der Fluidzuführung offen und werden bevorzugt beim Zuführen des Fluids zu der Abtragsfront und beim Abführen des Fluids von der Abtragsfront seitlich von einer Mantelfläche der Hohlstruktur begrenzt. In diesem Fall bildet die umlaufende Mantelfläche der Hohlstruktur, die in diesem Fall typischerweise in der Art eines Kanals ausgebildet ist, die seitliche Begrenzung der wendelförmigen Kanäle. Die stegförmigen helixförmigen Außenstrukturen liegen an der Mantelfläche der Hohlstruktur an oder sind geringfügig von dieser beabstandet. Die Abstützung der Fluidzuführung an der Mantelfläche der Hohlstruktur vereinfacht die Nachführung. Die Fluidzuführung wird in diesem Fall der Abtragsfront bevorzugt in Form einer Kombination aus einer Vorschub- und einer Drehbewegung nachgeführt.

Bei einer alternativen Weiterbildung sind die periodischen Außenstrukturen als Fluidleitungen ausgebildet, durch die das Fluid der Abtragsfront zugeführt und von der Abtragsfront abgeführt wird. In diesem Fall werden mindestens zwei das Fluid führende Außenstrukturen, typischerweise in Form von flexiblen Schläuchen, beispielsweise in einer Mehrfachhelix-Form, insbesondere in einer Doppelhelix-Form, um den festen Kern der Fluidzuführung gewickelt. Die Fluidzuführung mit den helixförmigen Außenstrukturen weist einen Durchmesser auf, der typischerweise geringfügig kleiner als der Durchmesser der Hohlstruktur ist, die in diesem Fall in der Regel in Form eines Kanals ausgebildet ist. Die Fluidzuführung kann sich über die periodischen, insbesondere helixförmigen Außenstrukturen in Form der Fluidleitungen an der Mantelfläche der Hohlstruktur abstützen, was die Nachführung der Fluidzuführung vereinfacht.

Bei einer weiteren alternativen Weiterbildung wird das Fluid der Abtragsfront in dem Kern zugeführt und von der Abtragsfront über die mindestens eine periodische Außenstruktur abgeführt, oder umgekehrt. In diesem Fall wird typischerweise das Fluid, in der Regel in Form von Frischwasser, der Abtragsfront durch den hohlen, in der Regel flexiblen Kern der Fluidzuführung zugeführt. Für die Abführung des Fluids und von abgetragenem Material wird die periodische, insbesondere helixförmige Außenstruktur der Fluidzuführung verwendet. Dies unterscheidet die Fluidzuführung von einer flexiblen Fluidleitung in Form eines doppelwandigen Schlauchs, der zwei Kammern aufweist, um das Fluid der Abtragsfront zuzuführen und von der Abtragsfront abzuführen.

Bei einer Weiterbildung dieser Variante ist die mindestens eine periodische Außenstruktur stegförmig ausgebildet und das Fluid wird in mindestens einem wendelförmigen Kanal zwischen dem Kern der Fluidzuführung und einer Mantelfläche der Hohlstruktur von der Abtragsfront abgeführt, wobei bevorzugt zum Abführen des Fluids die Fluidzuführung in der Hohlstruktur gedreht wird. Durch drehen der Fluidzuführung und somit auch des wendelförmigen Kanals kann Fluid, typischerweise in Form von Abwasser und Abtragsmaterial, in der Art einer archimedischen Schraube aktiv von der Abtragsfront weg gefördert werden. Die Anzahl der periodischen, bevorzugt helixförmigen Außenstrukturen bzw. der wendelförmigen Kanäle ist praktisch frei wählbar und bestimmt teilweise das Rücktransportverhalten des Fluids.

Durch die Drehbewegung kann eine mechanische Zerkleinerung von Abtragsprodukten erfolgen, was die Verstopfungsgefahr der Fluidzuführung reduziert. Für die Drehung der Fluidzuführung kann beispielsweise ein Gewindeantrieb verwendet werden, der die Fluidzuführung in einem Leerlaufbetrieb dreht, ohne einen Vorschub zu bewirken.

Bei einer weiteren Variante wird die Fluidzuführung der Abtragsfront mittels eines Gewindeantriebs nachgeführt, der an der mindestens einen helixförmigen Außenstruktur angreift. Wie weiter oben beschrieben wurde, kann der Gewindeantrieb in einem Leerlaufbetrieb dazu verwendet werden, die Fluidzuführung in der Hohlstruktur zu drehen und auf diese Weise eine aktive Rückförderung des Fluids zu bewirken.

Mit dem Gewindeantrieb, der nicht im Leerlauf betrieben wird, kann ein Vorschub der Fluidzuführung in der Hohlstruktur erfolgen, um die Fluidzuführung der Abtragsfront nachzuführen. Mittels eines Gewindeantriebs ist eine präzise Einführung und Nachführung der Fluidzuführung sowie eine Positionsbestimmung der Fluidzuführung in dem Werkstück möglich. Zudem wird für die Nachführung bzw. die zu diesem Zweck verwendete Einheit in diesem Fall nur ein geringer Bauraum benötigt. Gleichzeitig kann durch den Gewindeantrieb eine automatische Drehung der Fluidzuführung und eine Rückrutschsicherung umgesetzt werden.

Ein weiterer Aspekt der Erfindung betrifft eine Vorrichtung der eingangs genannten Art, bei die Fluidzuführung zum Zuführen des Fluids zu der Abtragsfront und/oder zum Abführen des Fluids von der Abtragsfront mindestens eine in mindestens einer Raumrichtung periodische Außenstruktur, bevorzugt eine helixförmige Außenstruktur, aufweist. Die Fluidzuführung weist typischerweise zusätzlich eine Nachführungseinrichtung auf, die es ermöglicht, die Fluidzuführung automatisiert der jeweiligen Abtragsfront nachzuführen. Die Nachführungseinrichtung weist zu diesem Zweck in der Regel mindestens einen Antrieb auf.

Bei einer Ausführungsform weist die Fluidzuführung einen bevorzugt massiven Kern auf, der von der mindestens einen periodischen Außenstruktur umgeben ist.

Bei einer Weiterbildung dieser Ausführungsform ist der Kern von mindestens zwei periodischen Außenstrukturen umgeben, die zur Zuführung des Fluids zu der Abtragsfront und zum Abführen des Fluids von der Abtragsfront ausgebildet sind. Bevorzugt sind die helixförmigen Außenstrukturen stegförmig ausgebildet und trennen mindestens einen ersten wendelförmigen Kanal, der zur Zuführung des Fluids zur Abtragsfront dient, von mindestens einem zweiten wendelförmigen Kanal, der zum Abführen des Fluids von der Abtragsfront dient. Insbesondere können die wendelförmigen Kanäle an der Außenseite der Fluidzuführung offen sein. In diesem Fall können die wendelförmigen Kanäle beim Zuführen des Fluids zu der Abtragsfront und beim Abführen des Fluids von der Abtragsfront seitlich von einer Mantelfläche der Hohlstruktur begrenzt werden.

Bei einer alternativen Weiterbildung sind die periodischen Außenstrukturen als Fluidleitungen ausgebildet, die zur Zuführung des Fluids zu der Abtragsfront und zum Abführen des Fluids von der Abtragsfront dienen.

Bei einer weiteren alternativen Weiterbildung ist die Vorrichtung ausgebildet, das Fluid der Abtragsfront über den Kern zuzuführen und das Fluid von der Abtragsfront mittels der mindestens einen periodischen Außenstruktur abzuführen, oder umgekehrt. Die mindestens eine periodische Außenstruktur ist bevorzugt stegförmig ausgebildet, um das Fluid in mindestens einem wendelförmigen Kanal zwischen dem Kern der Fluidzuführung und einer Mantelfläche der Hohlstruktur von der Abtragsfront abzuführen. Die Vorrichtung ist insbesondere ausgebildet, zum Abführen des Fluids die Fluidzuführung in der Hohlstruktur zu drehen und weist zu diesem Zweck einen geeigneten Antrieb auf.

Bei einer weiteren Ausführungsform weist die Vorrichtung einen Gewindeantrieb auf, der ausgebildet ist, an der mindestens einen helixförmigen Außenstruktur anzugreifen, um die Fluidzuführung der Abtragsfront nahzuführen. Wie weiter oben in Zusammenhang mit dem Verfahren beschrieben wurde, kann der Gewindeantrieb in einem Leerlaufbetrieb dazu verwendet werden, die Fluidzuführung in der Hohlstruktur zu drehen und auf diese Weise eine aktive Rückförderung des Fluids zu bewirken.

An Stelle der weiter oben beschriebenen periodischen, insbesondere helixförmigen Außenstruktur kann die Fluidzuführung ggf. andere geeignete Außenstrukturen oder Konturen aufweisen, welche die Einführung in die Hohlstruktur bzw. die Nachführung zur Abtragsfront zu verbessern. Auch können zu diesem Zweck andere Maßnahmen als das Vorsehen von Außenkonturen an der Fluidzuführung vorgenommen werden, die alternativ oder zusätzlich bei dem weiter oben beschriebenen Verfahren zum Einsatz kommen können.

Beispielsweise kann mittels der insbesondere flexiblen Fluidzuführung ein Fluidstrom auf eine Mantelfläche der Hohlstruktur gerichtet werden, der bevorzugt an mehreren mantelseitigen Austrittsöffnungen aus der Fluidzuführung, genauer gesagt aus einem Mantel der Fluidzuführung, austritt. Durch das Ausrichten eines Fluidstroms auf die Mantelfläche der Hohlstruktur, der insbesondere in Form von mehreren Teilströmen aus mehreren Austrittsöffnungen gleichzeitig austreten kann, kann sich die Fluidzuführung in der Hohlstruktur - insbesondere in Form eines Temperierkanals - selbst zentrieren. Dies ist insbesondere der Fall, wenn der Fluidstrom bzw. die aus den jeweiligen Austrittsöffnungen austretenden Teilströme in Bezug auf ein Zentrum der Fluidzuführung radial austreten. Auf diese Weise kann ein Hängenbleiben der Fluidzuführung an der Mantelfläche bzw. an den Wänden der Hohlstruktur typischerweise verhindert werden, ähnlich wie dies bei einem hydrodynamischen Gleitlager der Fall ist. Die Robustheit des Spülprozesses wird dadurch erhöht und die Anzahl der händischen Eingriffe in den Spülprozess wird reduziert. Auch können Prozessabbrüche in der Regel vermieden werden und es kann eine geringere Fehlerquote, insbesondere eine geringere Schrottquote, bei der Herstellung der Hohlstruktur erreicht werden.

Die mantelseitigen Austrittsöffnungen sind bevorzugt benachbart zu einem Kopfende bzw. einem austrittsseitigen Ende der Fluidzuführung gebildet, an der das Fluid stirnseitig in Richtung auf die Abtragsfront austritt. Der zusätzliche Fluidstrom, der in Richtung auf die Mantelfläche der Hohlstruktur ausgerichtet ist, verbessert die Eigenpositionierung der Fluidzuführung im Querschnitt der Hohlstruktur.

Die Austrittsöffnungen werden in der Regel in Form von gezielten Perforationen in den Mantel der Fluidzuführung eingebracht, um die Fluidzuführung von allen Wänden der in der Regel in Form eines Kanals ausgebildeten Hohlstruktur wegzudrücken. Eine sinnvolle Mindestanzahl für die Austrittsöffnungen liegt bei vier, um alle vier Quadranten des Kanalquerschnitts abzudecken. Die Geometrie der Austrittsöffnungen ist frei wählbar, beispielsweise kann es sich um Kreise bzw. Zylinder, und Ellipsen bzw. Koni, um Schlitze, etc. handeln. Die Teilströme des Fluidstroms treten bevorzugt in gleichen azimutalen Abständen aus den Austrittsöffnungen aus, um die Zentrierung zu erleichtern. Es versteht sich, dass der durch die Austrittsöffnungen austretende Fluidstrom den auf die Abtragsfront ausgerichteten Fluidstrom möglichst wenig beeinflussen sollte. Um dies zu erreichen, ist es erforderlich, die Austrittsöffnungen so zu dimensionieren, dass weiterhin eine ausreichende Spülung der Abtragsfront gewährleistet wird und ein ausreichender Rückfluss der Ablationsprodukte möglich ist. Hierbei sind die applizierbaren Drücke bzw. Volumenströme zu berücksichtigen.

Es ist nicht zwingend erforderlich, dass alle Austrittsöffnungen, die den auf die Mantelfläche ausgerichteten Fluidstrom erzeugen, im gleichen Abstand vom stirnseitigen Ende der Fluidzuführung angeordnet sind. Beispielsweise sind mehrstufige Perforationen bzw. Austrittsöffnungen möglich, z.B. eine erste Gruppe von kleinen Austrittsöffnungen in der Nähe des austrittsseitigen Endes der Fluidzuführung und eine zweite Gruppe von größeren Austrittsöffnungen in einem größeren Abstand vom austrittsseitigen Ende der Fluidzuführung. Die Austrittsöffnungen einer jeweiligen Gruppe können insbesondere im gleichen Abstand vom austrittsseitigen Ende der Fluidzuführung angeordnet sein, z.B. entlang eines umlaufenden Rings an der Mantelfläche.

Der Fluidstrom bzw. die Teilströme des Fluidstroms können senkrecht zur Fluidzuführung, genauer gesagt zu deren Umfang bzw. Mantel, oder von der Abtragsfront weg auf die Mantelfläche der Hohlstruktur gerichtet werden. Im letzteren Fall ist der Fluidstrom von einem der Abtragsfront benachbarten Ende der Fluidzuführung weg gerichtet, d.h. der Fluidstrom tritt unter einem stumpfen Ausströmwinkel (> 90°) in Bezug auf das der Abtragsfront benachbarte Ende der Fluidzuführung aus. Werden die Austrittsöffnungen unter einem stumpfen Ausström- bzw. Neigungswinkel eingebracht, kann sowohl der Vorschub der Fluidleitung als auch der Rückfluss des Fluids von der Abtragsfront gezielt unterstützt werden. Der auf die Abtragsfront ausgerichtete Fluidstrom, der typischerweise stirnseitig am Kopfende der Fluidzuführung austritt, weist in der Regel einen größeren Volumenstrom auf als der Fluidstrom, der auf die Mantelfläche der Hohlstruktur ausgerichtet ist.

Es ist auch möglich, dass die flexible Fluidzuführung in Form eines doppelwandigen bzw. mehrlumigen Schlauchs ausgebildet ist, d.h. in Form eines Schlauchs mit mehreren Kammern. Anstatt das Fluid für den auf die Mantelfläche ausgerichteten Fluidstrom aus der Hauptkammer zu entnehmen und damit den Fluidstrom zu stören, der auf die Abtragsfront ausgerichtet ist, wird das Fluid, das zur Stabilisierung des Fluidzuführung verwendet wird, über eine Außen- bzw. Nebenkammer geführt. Am Schlauchende ist der Übergang zwischen der Außen- und der Innenkammer frei gestaltbar, sodass die Hauptfunktion der Spülung weiterhin gewährleistet ist und auf die Abtragsfront optimiert werden kann.

Eine weitere Möglichkeit zur Realisierung der Austrittsöffnungen besteht darin, am Ende der flexiblen Fluidzuführung eine in der Regel starre Endkappe in Form einer Düse bzw. Hülse anzubringen, in welche die Austrittsöffnungen eingebracht sind, um den Fluidstrom auf die Mantelfläche auszurichten. Die Düse bzw. Endkappe kann beispielsweise durch ein 3D-Druckverfahren hergestellt werden, insbesondere durch 2-Photonen-Polymerisation, welche die Herstellung sehr feiner und kleiner Komponenten ermöglicht. Zur Strömungsoptimierung an der Abtragsfront sowie zur Stabilisierung der Fluidzuführung in dem Hohlraum kann am Ende eines flexiblen Schlauchs die Düse bzw. die Abschlusshülse aufgesetzt werden. Diese Lösung ist auch für die weiter oben beschriebenen mehrlumigen Schläuche anwendbar.

Die Perforationen bzw. die Austrittsöffnungen können auf unterschiedliche Weise in das in der Regel flexible Material des Mantels eingebracht werden. Eine Möglichkeit besteht in der Durchführung eines Laser-Ablationsprozesses, bei dem der Durchmesser der Austrittsöffnungen praktisch frei wählbar ist. Über eine geeignete Halterung kann in diesem Fall der Neigungswinkel der Austrittsöffnungen vorgegeben werden. Für die Durchführung des Laser-Ablationsprozesses kann neben einem klassischen Scanner-Linse-Setup auch eine Bohroptik, z.B. in Form einer Wendelbohroptik oder einer Trepanieroptik, verwendet werden. Auch ein optischer Aufbau unter Verwendung eines Axicons ist möglich.

Eine weitere - weitaus simplere - Herstellungsmethode orientiert sich an einem Zigarrenschneider und die Austrittsöffnungen werden durch mechanisches Lochen, Schneiden bzw. Ritzen in den Mantel eingebracht. An Stelle einer Klinge wie bei einem Zigarrenschneider können sich in diesem Fall Nadeln bzw. Schneiden an einem Kranz einer entsprechenden Vorrichtung befinden, die beim Betätigen eines geeigneten Mechanismus das Schlauchsubstrat mechanisch entfernen, wobei die Entfernung durch Schneiden oder abrasiv erfolgen kann. Zur Fixierung der flexiblen Fluidzuführung bzw. des Mantels kann eine Ring-Halterung mit entsprechenden Öffnungen zur Ausrichtung der Nadeln bzw. Schneiden genutzt werden. Ein weiteres Halte-Element kann in das Kopfende der flexiblen Fluidleitung eingeführt werden, um den Schlauchmantel beim Eindringen der Schneiden bzw. Nadeln vor Knicken zu schützen, da durch das Halte-Element die Steifigkeit des Mantels deutlich erhöht wird. Der Kranz mit den Schneiden bzw. Nadeln kann auch so ausgebildet sein, dass die Nadeln die Austrittsöffnungen im passenden Ausströmwinkel in die Schlauchmantelfläche einbringen.

Die weiter oben beschriebenen Möglichkeiten zur Einbringung bzw. zur Anbringung der Austrittsöffnungen an der Fluidzuführung sind grundsätzlich für beliebige Arten von Spülschlauch-Substraten anwendbar.

Die weiter oben beschriebenen Austrittsöffnungen bzw. der auf die Mantelfläche ausgerichtete Fluidstrom ermöglichen eine Stabilisierung der Fluidzuführung in der Hohlstruktur in der Regel nur bei Hohlstrukturen, die einen vergleichsweise kleinen Durchmesser aufweisen, wie dies typischerweise der Fall ist, wenn diese zur Durchströmung mit einem Temperierfluid vorgesehen sind. Es ist aber auch möglich, dass es sich bei der Hohlstruktur oder bei einem Teil der Hohlstruktur um einen Hohlraum handelt, der einem anderen Zweck dient, beispielsweise um mechanische Spannungen zu dämpfen, die von Anbauteilen, z.B. von Buchsen oder dergleichen, auf das Substrat ausgeübt werden, die beispielsweise an der Rückseite des Substrats angebracht werden. Auf diese Weise kann die an der Vorderseite des Substrats vorgesehene Spiegelfläche vor einem Durchdrücken der mechanischen Spannungen geschützt werden.

Dies erfordert in der Regel, dass der Hohlraum in der Draufsicht auf den Spiegel die jeweilige Störkontur, beispielsweise in Form einer angeklebten Buchse an der Rückseite, komplett verdeckt. Um einen solchen in der Regel großvolumigen Hohlraum in dem Substrat herzustellen, wird ein Zugang zu dem Hohlraum benötigt, d.h. eine Verbindung zu einer Seite des Substrats. Als Zugang kann eine Hohlstruktur in der Art eines Kanals verwendet werden, wie er in Form eines Temperierkanals für den Durchfluss eines Temperierfluids genutzt wird. Sowohl der kanalförmige Zugang als auch der großvolumige Hohlraum kann durch das weiter oben beschriebene Verfahren zum Abtragen von Material realisiert werden.

Da die Hohlstruktur im vorliegenden Fall nur einen Zugang benötigt, dient dieser sowohl als Zulauf zur Zuführung des Spülfluids bzw. der entsprechenden Fluidzuführung in die Hohlstruktur und für den Ablauf des Spülfluids und der Ablationsprodukte aus der Hohlstruktur. Da die Hohlstruktur bzw. der großräumige Hohlraum wie weiter oben beschrieben wurde die gesamte Störkontur an der Außenseite des Substrats verdecken sollte, ist es erforderlich, dass sich die Hohlstruktur ausgehend von einem kanalförmigen Abschnitt mit einem Durchmesser von in der Regel wenigen Millimetern lateral auf einige 10 mm aufweitet. An der Abtragsfront, die bei der Herstellung einer solchen Hohlstruktur gebildet wird, müssen auch in dem großvolumigen, flächenartigen Hohlraum über die gesamte Breite und Höhe der Abtragsfront, die der Breite und der Höhe des Hohlraums in einem jeweiligen Querschnitt entspricht, die Ablationsprodukte abtransportiert und aus dem Hohlraum bzw. aus der Hohlstruktur abgeführt werden.

Für die Spülung eines solchen großvolumigen Hohlraums mit einer entsprechend großflächigen Abtragsfront sind die typischerweise verwendeten Fluidzuführungen in Form von flexiblen Schläuchen nicht ohne weiteres geeignet. Es ist daher günstig bzw. erforderlich, die Fluidzuführung geeignet zu modifizieren, um auch die Spülung von Abtragsfronten von großvolumigen Hohlräumen zu ermöglichen, ohne hierbei Inhomogenitäten oder Schädigungen des Substrats zu erzeugen. Zu diesem Zweck bestehen verschiedene Möglichkeiten:
Bei einem Verfahren zur Bildung einer Hohlstruktur, die einen großvolumigen Hohlraum und einen kanalförmigen Zugang zu dem großvolumigen Hohlraum aufweist, durch materialabtragende Bearbeitung eines Werkstücks, bevorzugt eines Substrats für einen EUV-Spiegel, wird bei einer Variante einer in dem großvolumigen Hohlraum gebildeten Abtragsfront über mehrere in dem kanalförmigen Zugang geführte, sich in den großvolumigen Hohlraum erstreckende, bevorzugt flexible Fluidzuführungen gleichzeitig ein Fluid zugeführt.

Bei dieser Variante wird der Abtragsfront in dem großvolumigen Hohlraum über mehrere gleichzeitig in dem kanalförmigen Zugang geführte Fluidzuführungen ein Fluid zugeführt. Die Fluidzuführungen können in dem kanalförmigen Zugang in der Art eines Bündels geführt werden. Für die Spülung der Abtragsfront ragen die Fluidzuführungen mit ihren austrittsseitigen Enden in den großvolumigen Hohlraum hinein. Um die Abtragsfront möglichst homogen zu spülen, werden die austrittseitigen Enden der Fluidzuführungen in dem Hohlraum auf unterschiedliche Positionen der Abtragsfront ausgerichtet. Bei dieser Variante ist es erforderlich, den Durchmesser des kanalförmigen Zugangs zu dem großvolumigen Hohlraum so groß zu wählen, dass mehrere flexible Fluidzuführungen, insbesondere in Form eines Arrays an Fluidzuführungen, durch den kanalförmigen Zugang in den großvolumigen Hohlraum geführt werden können.

Bei einer alternativen Variante wird der Abtragsfront in dem großvolumigen Hohlraum über ein austrittsseitiges Ende der Fluidzuführung ein Fluid zugeführt, das eine Flachstrahldüse oder eine einstellbare Düse aufweist. Die Düse kann beispielsweise in der Art eines Aufsatzes oder dergleichen an der flexiblen Fluidzuführung angebracht werden. Für den Fall, dass es sich um eine Flachstrahldüse handelt, kann das Fluid optimal in dem Hohlraum verteilt werden, um eine im Wesentlichen flächig ausgebildete Abtragsfront vollständig zu spülen, wenn das austrittsseitige Ende der Flachstrahldüse in einem ausreichenden Abstand von der Abtragsfront angeordnet wird. Eine einstellbare Düse ermöglicht es, die Strahleigenschaften des Fluidstroms zu variieren, der auf die Abtragsfront ausgerichtet wird. Beispielsweise kann mittels einer einstellbaren Düse der Öffnungswinkel des Fluidstroms verändert werden. Für die Bildung des kanalförmigen Zugangs und des großvolumigen Hohlraums kann in diesem Fall ein- und dieselbe Fluidzuführung verwendet werden, wenn der Öffnungswinkel des Fluidstroms in dem kanalförmigen Zugang vergleichsweise klein und in dem großvolumigen Hohlraum vergleichsweise groß gewählt wird, um die Abtragsfront zu spülen. Auf diese Weise kann in dem kanalförmigen Zugang ein konzentrierter Fluidstrom erzeugt werden, der nach vorne ausgerichtet ist und in dem großvolumigen Hohlraum kann eine breite Spülung des Volumens des Hohlraums erfolgen. Als variable Düse kann beispielsweise ein variabler Spülkopf verwendet werden, wie er auch - in entsprechend modifizierter Form - in Form von Spritzen für die Bewässerung von Gärten oder dergleichen zum Einsatz kommt.

Bei einer weiteren Variante wird ein in den großvolumigen Hohlraum eingeführtes austrittsseitiges Ende der Fluidzuführung bevorzugt oszillierend bewegt, um das Fluid unterschiedlichen Positionen der Abtragsfront zuzuführen. Bei dieser Variante wird die flexible Fluidzuführung bzw. die weiter oben beschriebene Düse innerhalb des großvolumigen Hohlraums bewegt und führt hierbei definierte, insbesondere oszillierende Bewegungen aus, um die gesamte Abtragsfront zu spülen. Durch die definierte, insbesondere oszillierende Bewegung wird jede Position der Abtragsfront von Zeit zu Zeit gespült, es findet aber keine konstante Spülung der gesamten Abtragsfront mit einem Fluid statt. Für den Fall, dass es sich bei dem großvolumigen Hohlraum um einen Hohlraum mit einem flächenartigen Querschnitt handelt, der eine erheblich größere Breite als Höhe aufweist, kann die oszillierende Bewegung in einer Ebene erfolgen. Es ist aber auch möglich, dass das austrittsseitige Ende der Fluidzuführung in dem Hohlraum eine dreidimensionale oszillierende Bewegung ausführt, um nacheinander unterschiedliche Positionen der Abtragsfront zu spülen.

Bei einer weiteren Variante weist die Fluidzuführung an ihrem austrittsseitigen Ende mindestens eine Austrittseinheit für das Fluid auf, die beim Einführen in den Hohlraum in eine ausgefahrene Stellung bewegt, bevorzugt verschwenkt, wird, um der Abtragsfront das Fluid zuzuführen. Bei dieser Variante befindet sich die Austrittseinheit während der Anordnung des austrittsseitigen Endes der Fluidzuführung in dem kanalförmigen Zugang in einer zurückgezogenen Stellung und wird erst dann in die ausgefahrene Stellung bewegt bzw. verschwenkt, wenn sich das austrittsseitige Ende der Fluidzuführung innerhalb des großvolumigen Hohlraums befindet.

Die Austrittseinheit kann beispielsweise in der Art eines Aufsatzes ausgebildet sein, die an dem austrittsseitigen Ende der Fluidzuführung angebracht ist. In der zurückgezogenen Stellung tritt typischerweise kein Fluid aus der Austrittseinheit auf, d.h. in dem kanalförmigen Zugang wird die Fluidzuführung wie eine herkömmliche Fluidzuführung verwendet. Erst wenn das austrittsseitige Ende der Fluidzuführung in den großvolumigen Hohlraum eingeführt wurde, wird die Austrittseinheit in die ausgefahrene Stellung bewegt und der Abtragsfront wird über die Austrittseinheit das Fluid zugeführt, d.h. das Spülverhalten der Fluidzuführung wird verändert.

Die Zuführung des Fluids zu der Abtragsfront über die Austrittseinheit(en) erfolgt in der Regel zusätzlich zum Austritt des Fluids aus einem stirnseitigen Ende der Fluidzuführung. Die mindestens eine Austrittseinheit ist in der ausgefahrenen Stellung bevorzugt unter einem vorgegebenen, in der Regel spitzen Ausströmwinkel zum Zentrum der Fluidzuführung ausgerichtet, um das Fluid auf die Abtragsfront auszurichten. Die Austrittseinheit(en) bzw. der entsprechende Spülkopf entfaltet sich erst in dem Hohlraum, um einen größeren Teil der Abtragsfront zu spülen, als dies mit dem austrittsseitigen Ende der Fluidzuführung ohne die Verwendung der Austrittseinheit(en) möglich wäre. Abhängig von der Art des Mechanismus, der das Bewegen der Austrittseinheit(en) bewirkt, ist es ggf. nicht möglich, die Austrittseinheit(en) aus der ausgefahrenen in die zurückgezogene Stellung zu bewegen. Das Herausziehen der Fluidzuführung aus dem Hohlraum bzw. aus der Hohlstruktur ist daher ggf. nicht ohne eine Beschädigung der Austrittseinheit(en) bzw. der Fluidzuführung möglich. Es kann sich daher bei der Austrittseinheit bzw. bei der gesamten Fluidzuführung in diesem Fall ggf. um ein Einmal-Produkt handeln.

Bei allen weiter oben beschriebenen Varianten kann die Spülung der Abtragsfront mit einer Prozessüberwachung gekoppelt werden, um Fehler zeitnah detektieren und ggf. beheben zu können.

Das materialabtragende Bearbeiten des Werkstücks wird typischerweise in einem Prozessbecken vorgenommen, in dem sich das Fluid, genauer gesagt eine Flüssigkeit, befindet und in die das Werkstück für das materialabtragende Bearbeiten ganz oder teilweise eingetaucht wird. Die Versorgung des Prozessbeckens mit dem Spülfluid, in der Regel mit Wasser, nachfolgend auch als Prozesswasser bezeichnet, erfolgt typischerweise mit einer ersten Pumpe, die das Spülfluid in das Prozessbecken fördert. Die erste Pumpe kann zu diesem Zweck das Wasser aus einem Tank entnehmen und dieses durch einen Filter oder dergleichen, ggf. in Verbindung mit einem Kühlsystem, in das Prozessbecken fördern. Ein Teil des Wassers, das durch den Filter gepumpt wurde, wird über eine Bypass-Leitung wieder zurück in den Tank gepumpt.

Da das Wasser in dem Prozessbecken die Ablationsprodukte aufnimmt, ist es erforderlich, das Prozesswasser aus dem Prozessbecken abzuführen bzw. dieses auszutauschen. Dies kann durch eine zweite Pumpe erfolgen, die einen Teil des Prozesswassers aus dem Prozessbecken in den Tank zurückführt, um einen geschlossenen Prozesswasserkreislauf zu realisieren. Die Rückführung des Prozesswassers aus dem Prozessbecken in den Tank ist jedoch problematisch, da das Prozessbecken ggf. leer läuft und somit Luft in das Schlauchsystem der zweiten Pumpe gesaugt wird. Dies führt zu einer besonderen Anforderung an die zweite Pumpe, die durch die Verwendung einer Peristaltik-Pumpe erfüllt wird. Bei der Verwendung einer Peristaltik-Pumpe besteht jedoch das Problem, dass die beim abtragenden Bearbeiten in das Prozesswasser eingebrachten Partikel, insbesondere in Form von Glaspartikeln, den für die Rückführung verwendeten flexiblen Schlauch zerstören können. Dies führt zu einem erhöhten Wartungsaufwand und ggf. zum Austreten des Prozesswassers. Wird dieser Defekt nicht rechtzeitig festgestellt, führt dies dazu, dass das Prozessbecken überläuft und ggf. die Vorrichtung beschädigt wird, die zur Durchführung der materialabtragenden Bearbeitung eingesetzt wird. Zu einem Überlaufen des Prozessbeckens kann es auch kommen, wenn die erste Pumpe, d.h. die Prozesswasserpumpe, aktiv ist und aus einem beliebigen Grund die zweite Pumpe, d.h. die Rückführungspumpe, nicht aktiv ist.

Um die oben beschriebenen Probleme zu vermeiden, kann die zweite Pumpe in die Bypass-Leitung für die Rückführung eines Teils des von der ersten Pumpe geförderten Prozesswassers integriert und als Wasserstrahlpumpe bzw. als Venturipumpe ausgebildet werden. Die Wasserstrahlpumpe dient zum Ansaugen des Prozesswassers aus dem Prozessbecken über ein Ansaugrohr. Die Wasserstrahlpumpe kommt ohne bewegliche Teile aus, ist wartungsarm und nicht anfällig für Fehler. Die Wasserstrahlpumpe in der Bypass-Leitung ist zudem an die Pumpleistung der ersten Pumpe gekoppelt. Daher kann der Fall nicht auftreten, dass die erste Pumpe läuft, aber die zweite Pumpe nicht aktiv ist. Ein Überlaufen des Prozesswassers in dem Prozessbecken kann daher nur in dem Fall eintreten, dass der Rückführschlauch bzw. der Ansaugschlauch der zweiten Pumpe in Form der Wasserstrahlpumpe verstopft ist. Ein weiterer Vorteil der Wasserstrahlpumpe in der Bypass-Leitung besteht darin, dass diese nicht separat angesteuert werden muss. Für die hier beschriebene passive Prozesswasserrückführung wird eine Bypass-Leitung mit einem ausreichend großen Durchflussvolumen benötigt, um das Prozesswasser aus dem Prozessbecken abzuführen.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ausführungsbeispiele sind in der schematischen Zeichnung dargestellt und werden in der nachfolgenden Beschreibung erläutert. Es zeigt
Fig. 1 eine schematische Darstellung einer flexiblen Fluidzuführung, die einer Abtragsfront in einem Temperierkanal nachgeführt wird,
Fig. 2a,b schematische Darstellungen einer Fluidzuführung, die zum Zu- und Abführen des Fluids stegförmige helixförmige Außenstrukturen aufweist,
Fig. 3a,b schematische Darstellungen einer Fluidzuführung, die zum Zu- und Abführen des Fluids zwei helixförmige Außenstrukturen in Form von Fluidleitungen aufweist,
Fig. 4a,b schematische Darstellungen einer Fluidzuführung, die zur Zuführung des Fluids zu der Abtragsfront einen hohlen Kern und zum Abführen des Fluids von der Abtragsfront eine bzw. mehrere helixförmige Außenstrukturen aufweist,
Fig. 5a-d schematische Darstellungen einer Fluidzuführung, die Austrittsöffnungen bzw. Perforationen zum Ausrichten eines Fluidstroms auf die Mantelfläche des Temperierkanals aufweist,
Fig. 6 eine schematische Darstellung einer Vorrichtung zur Herstellung der Perforationen durch Laser-Ablation,
Fig. 7a,b schematische Darstellungen einer Vorrichtung zur Herstellung der Perforationen durch mechanisches Bearbeiten,
Fig. 8 eine schematische Darstellung eines Substrats mit einer Hohlstruktur, die einen großvolumigen Hohlraum und einen kanalartigen Zugang aufweist,
Fig. 9a-e schematische Darstellungen von Fluidzuführungen zum Spülen einer in dem großvolumigen Hohlraum gebildeten Abtragsfront, sowie
Fig. 10a,b schematische Darstellungen einer Vorrichtung zur Zu- und Abführung von Prozesswasser zu einem bzw. aus einem Prozessbecken.

In der folgenden Beschreibung der Zeichnungen werden für gleiche bzw. funktionsgleiche Bauteile identische Bezugszeichen verwendet.

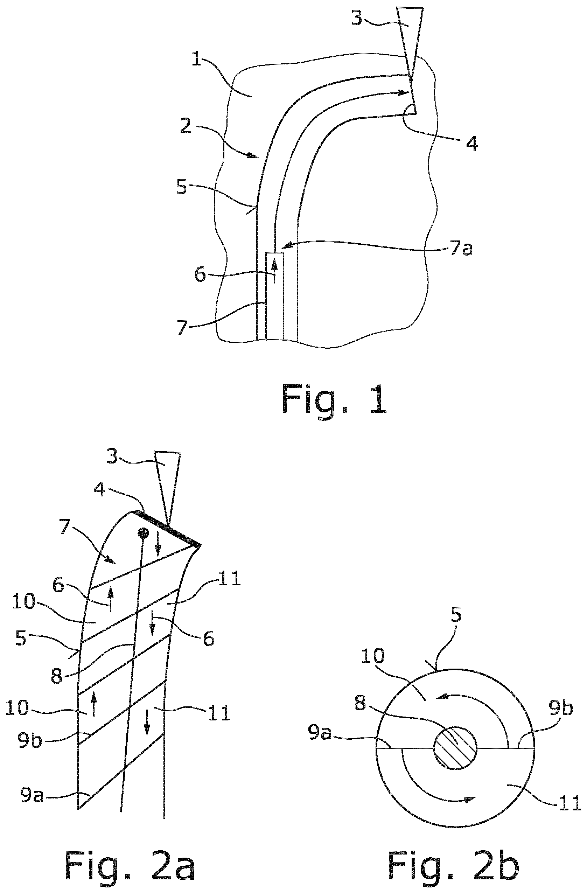

**Fig. 1** zeigt ein Detail eines Substrats 1 für einen EUV-Spiegel, das im gezeigten Beispiel aus titandotiertem Quarzglas gebildet ist. Der EUV-Spiegel wird in einem Projektionsobjektiv einer nicht bildlich dargestellten EUV-Lithographieanlage verwendet. An einer Oberfläche des Substrats 1 wird bei der Herstellung des EUV-Spiegels eine reflektierende Beschichtung aufgebracht, die in Fig. 1 nicht bildlich dargestellt ist. Die reflektierende Beschichtung dient zur Reflexion von Strahlung im EUV-Wellenlängenbereich.

An dem Substrat 1 wird ein Verfahren zur materialabtragenden Bearbeitung durchgeführt, wie es in der eingangs zitierten WO2023/0110816A2 beschrieben ist, die durch Bezugnahme in ihrer Gesamtheit zum Inhalt dieser Anmeldung gemacht wird. Mit Hilfe des Verfahrens wird in dem Substrat 1 eine Hohlstruktur 2 in Form eines Temperierkanals gebildet, der einen vergleichsweise geringen, konstanten Durchmesser in der Größenordnung von wenigen Millimetern aufweist.

Bei dem Verfahren wird das Material des Substrats 1 mit einem gepulsten Laserstrahl 3 bestrahlt, wobei eine Abtragsfront 4 gebildet wird, welche die Hohlstruktur 2 in Form des Temperierkanals bei deren Herstellung in Längsrichtung begrenzt. Die Abtragsfront 4 ist als Ebene bzw. als ebene Fläche ausgebildet, die eine Grenzfläche zwischen der Hohlstruktur 2 und dem Material des Substrats 1 darstellt. Die Hohlstruktur 2 wird umfangsseitig durch eine Mantelfläche 5 begrenzt, die im gezeigten Beispiel eine zylindrische Form aufweist.

Das durch den gepulsten Laserstrahl 3 abgetragene Material wird mit Hilfe eines Fluids 6 weggespült, das der Abtragsfront 4 mittels einer Fluidzuführung in Form einer flexiblen Fluidleitung 7 zugeführt wird. Zu diesem Zweck wird die Fluidleitung 7 der Abtragsfront 4 nachgeführt, wie in Fig. 1 durch einen Pfeil angedeutet ist. Das Fluid 6 tritt an einer Öffnung an der Stirnseite eines austrittsseitigen Endes 7a aus der flexiblen Fluidleitung 7 aus. Bei dem Fluid 6 handelt es sich im gezeigten Beispiel um eine Flüssigkeit, genauer gesagt um Wasser. Als Fluid 6 kann aber auch eine andere Flüssigkeit oder ggf. ein Gas eingesetzt werden. Das Fluid 6 wird im gezeigten Beispiel über die flexible Fluidleitung 7 von der Abtragsfront 4 abgeführt, wozu diese zwei Kammern aufweist bzw. als doppelwandiger Schlauch ausgebildet ist. Es ist grundsätzlich auch möglich, das Fluid 6 über die flexible Fluidleitung 7 der Abtragsfront 4 zuzuführen und zwischen der flexiblen Fluidleitung 7 und der Mantelfläche 5 der Hohlstruktur 2 von der Abtragsfront 4 abzuführen.

Die in Fig. 1 dargestellte Fluidzuführung 7 in Form der flexiblen Fluidleitung lässt sich der Abtragsfront 4 bei deren Bewegung durch das Substrat 1 nur schwer nachführen. **Fig. 2a,b** zeigen eine Fluidzuführung 7, die zum Zuführen des Fluids 6 zu der Abtragsfront 4 und zum Abführen des Fluids 6 von der Abtragsfront 4 zwei stegförmige, in einer Raumrichtung periodische helixförmige Außenstrukturen 9a,b aufweist, die einen massiven Kern 8 der Fluidzuführung 7 umgeben. Der massive Kern 8 ist im gezeigten Beispiel als Draht ausgebildet und bildet das stabile Grundgerüst der Fluidzuführung 7, welches es ermöglicht, die Fluidzuführung 7 besser in die Hohlstruktur 2 in Form des Temperierkanals einzuführen und die Fluidzuführung 7 auf definierte Weise in der Hohlstruktur 2 zu drehen.

Um den massiven Kern 8 sind die beiden stegförmigen helixförmigen Außenstrukturen 9a,b in der Art einer Doppelhelix gewickelt. Die helixförmigen Außenstrukturen 9a,b trennen einen ersten wendelförmigen Kanal 10, über den das Fluid 6 der Abtragsfront 4 zugeführt wird, von einem zweiten wendelförmigen Kanal 11, über den das Fluid 6 von der Abtragsfront 4 abgeführt wird. Wie dies insbesondere in Fig. 2b zu erkennen ist, welche die Fluidzuführung 7 im Querschnitt zeigt, sind die wendelförmigen Kanäle 10, 11 an der Außenseite der Fluidzuführung 7 offen und werden beim Zuführen des Fluids 6 zu der Abtragsfront 4 und beim Abführen des Fluids 6 von der Abtragsfront 4 von einer Mantelfläche 5 der Hohlstruktur 2 seitlich, im gezeigten Beispiel in radialer Richtung, begrenzt.

Beim in Fig. 2a,b gezeigten Beispiel liegen die stegförmigen helixförmigen Außenstrukturen 9a, 9b an der Mantelfläche 5 der Hohlstruktur 2 an, dies ist aber ggf. nicht zwingend erforderlich. Die stegförmigen helixförmigen Außenstrukturen 9a, 9b sind aus Kunststoff gebildet, um die Fluidzuführung 7 flexibel zu halten und die Reibung zwischen der Fluidzuführung 7 und der Mantelfläche 5 der Hohlstruktur 2 zu reduzieren. Es hat sich als günstig erwiesen, wenn die Fluidzuführung 7 von Fig. 2a,b mit einer Schraubenbewegung in die Hohlstruktur 2 eingeführt bzw. eingedreht wird.

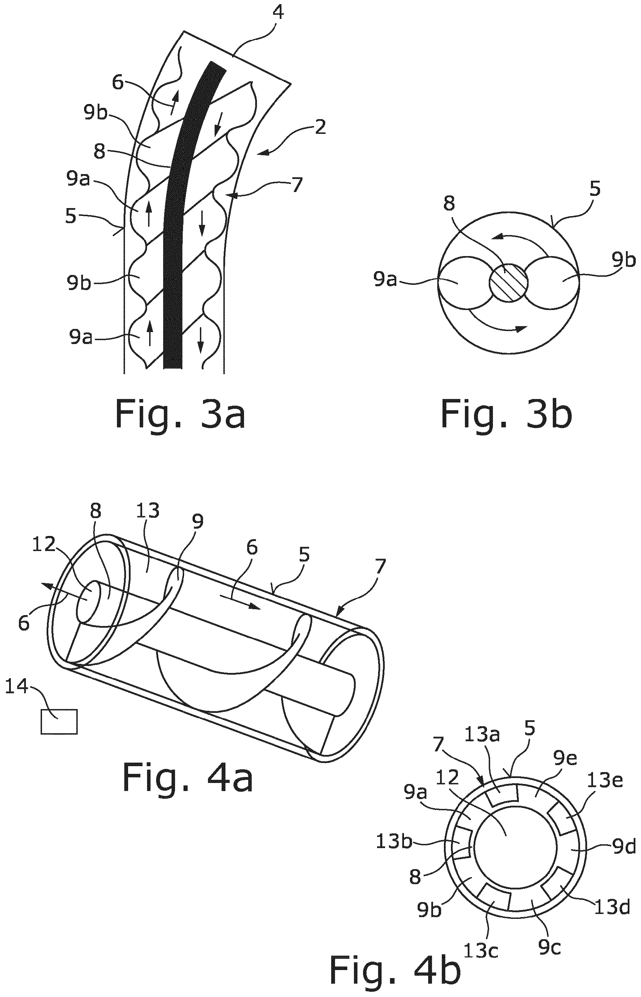

**Fig. 3a,b** zeigen eine Fluidzuführung 7, die sich von der in Fig. 2a,b gezeigten Fluidzuführung 7 dadurch unterscheidet, dass an Stelle von zwei stegförmigen helixförmigen Außenstrukturen 9a,b zwei helixförmige Außenstrukturen 9a, 9b in Form von Fluidleitungen den massiven Kern 8 umgeben. Die beiden Fluidleitungen 9a, 9b sind um den massiven Kern 8 in Form einer Doppelhelix gewickelt. Über die erste helixförmige Fluidleitung 9a wird der Abtragsfront 4 das Fluid 6 zugeführt und über die zweite helixförmige Fluidleitung 9b wird das Fluid 6 von der Abtragsfront 4 abgeführt. Wie in der Querschnittsdarstellung von Fig. 3b zu erkennen ist, können die beiden Fluidleitungen 9a,b an der Mantelfläche 5 der Hohlstruktur 2 in Form des Temperierkanals anliegen, es ist aber auch möglich, dass die Fluidleitungen 9a,b geringfügig von der Mantelfläche 5 der Hohlstruktur 2 beabstandet sind, wie dies in Fig. 3a dargestellt ist.

**Fig. 4a,b** zeigen eine Fluidzuführung 7, die sich von den in Fig. 2a,b und in Fig. 3a,b gezeigten Fluidzuführungen 7 zunächst dadurch unterscheidet, dass der Kern 8 nicht massiv ist, sondern vielmehr als Hohlzylinder ausgebildet ist, der einen zylindrischen Hohlraum 12 einschließt, in dem das Fluid 6 der Abtragsfront 4 zugeführt wird, wie dies in Fig. 4a angedeutet ist. Zum Abführen des Fluids 6 von der Abtragsfront 4 weist die Fluidzuführung 7 von Fig. 4a eine stegförmige helixförmige Außenstruktur 9 auf, die einen wendelförmigen Kanal 13 begrenzt, in dem das Fluid 6 von der Abtragsfront 4 abgeführt wird. Der wendelförmige Kanal 13 wird in Fig. 4a radial innen von dem Kern 8, genauer gesagt von der Außenseite des Kerns 8, begrenzt und radial außen von der Mantelfläche 5 der Hohlstruktur 2, in welche die Fluidzuführung 7 eingeführt wird, wobei die stegförmige helixförmige Außenkontur 9 ggf. geringfügig von der Mantelfläche 5 der Hohlstruktur 2 beabstandet sein kann, wie dies in Fig. 4a angedeutet ist.

Fig. 4b zeigt den Querschnitt einer Fluidzuführung 7, die sich von der in Fig. 4a gezeigten Fluidzuführung 7 dadurch unterscheidet, dass diese an Stelle einer einzigen stegförmigen helixförmigen Außenstruktur 9 eine Anzahl von sechs stegförmigen helixförmigen Außenstrukturen 9a-e aufweist, zwischen denen sechs wendelförmige Kanäle 13a-e verlaufen, über die das Fluid 6 von der Abtragsfront 4 abtransportiert wird.

Bei der in Fig. 4a,b beschriebenen Fluidzuführung 7 wird das Fluid 6 von der Abtragsfront 4 abtransportiert, indem die Fluidzuführung 7 in der Hohlstruktur 2 gedreht wird. Die Fluidzuführung 7 funktioniert in diesem Fall in der Art einer archimedischen Schraube. Für die Drehung der Fluidzuführung 7 dient ein in Fig. 4a durch ein Quadrat angedeuteter Gewindeantrieb 14, der an der bzw. den stegförmigen helixförmigen Außenstruktur(en) 9, 9a-e angreift. Für den Abtransport des Fluids 6 von der Abtragsfront 4 kann der Gewindeantrieb 14 im Leerlauf betrieben werden, wobei die Fluidzuführung 7 in der Hohlstruktur 2 gedreht wird, aber kein Vorschub der Fluidzuführung 7 erfolgt.

Um die Fluidzuführung 7 der Abtragsfront 4 nachzuführen, kann ein "Gang" des Gewindeantriebs 14 genutzt werden, der zusätzlich zur Drehung einen Vorschub der Fluidzuführung 7 in der Hohlstruktur 2 bewirkt. Es versteht sich, dass die Anzahl der stegförmigen helixförmigen Außenstrukturen praktisch frei wählbar ist, wobei die Anzahl der Außenstrukturen sich auf das Rücktransportverhalten des Fluids 6 von der Abtragsfront 4 auswirkt.

Um die Nahführung der Fluidzuführung 7 zu verbessern, ist es nicht zwingend erforderlich, helixförmige Außenstrukturen 9, 9a-e zu verwenden.

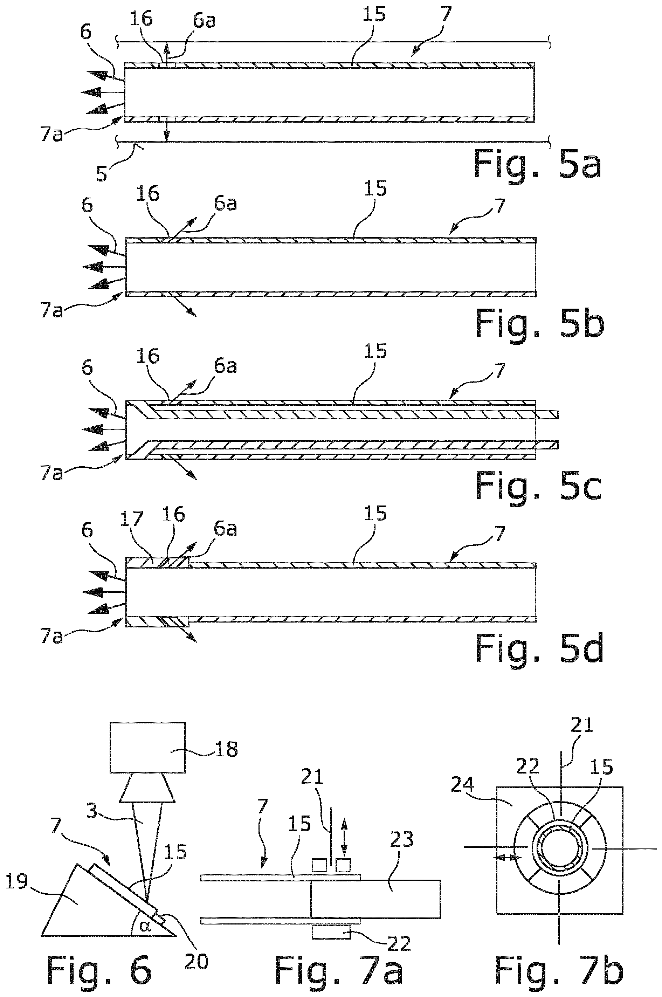

**Fig. 5a****-d** zeigen eine Fluidzuführung 7, die einen flexiblen, schlauchförmigen Mantel 15 aufweist, in dem das Fluid 6 der Abtragsfront 4 zugeführt wird. Das Fluid 6 tritt zu diesem Zweck in Form eines Fluidstroms an einer stirnseitigen

Öffnung eines austrittsseitigen Endes 7a der Fluidzuführung 7 aus. Die Fluidzuführung 7, genauer gesagt der schlauchförmige Mantel 15 der Fluidzuführung 7, weist eine Mehrzahl von Perforationen auf, die mantelseitige Austrittsöffnungen 16 für einen Fluidstrom 6a bilden, der auf die Mantelfläche 5 der Hohlstruktur 2 in Form des Temperierkanals ausgerichtet ist. Der schlauchförmige Mantel 15 weist im gezeigten Beispiel vier Austrittsöffnungen 16 auf, die in Umfangsrichtung unter einem Winkel von 90° zueinander ausgerichtet sind. Die über die vier Austrittsöffnungen 16 in radialer Richtung senkrecht zum Zentrum der Fluidzuführung 7 ausströmenden bilden gemeinsam den Fluidstrom 6a, der die Fluidzuführung 7 radial von der Mantelfläche 5 der Hohlstruktur 2 wegdrückt und diese innerhalb der Hohlstruktur 2 stabilisiert bzw. selbst zentriert. Auf diese Weise kann ein Hängenbleiben der Fluidzuführung 7 an der Mantelfläche 5 der Hohlstruktur 2 typischerweise verhindert werden, ähnlich wie dies bei einem hydrodynamischen Gleitlager der Fall ist. Die Robustheit des Spülprozesses wird dadurch erhöht und die Anzahl der händischen Eingriffe in den Spülprozess sinkt.

Wie in Fig. 5a zu erkennen ist, sind die mantelseitigen Austrittsöffnungen 16 benachbart zum austrittsseitigen Kopfende 7a der Fluidzuführung 7 angebracht, an der das Fluid 6 stirnseitig in Richtung auf die Abtragsfront 4 austritt. Die Austrittsöffnungen 16 werden in Form von gezielten Perforationen in den Mantel 15 der Fluidzuführung 7 eingebracht. Die Austrittsöffnungen 16 sind so dimensioniert, dass weiterhin eine ausreichende Spülung der Abtragsfront 4 gewährleistet ist und ein ausreichender Rückfluss der Ablationsprodukte möglich ist.

Bei dem in Fig. 5a gezeigten Beispiel ist der auf die Mantelfläche 5 der Hohlstruktur 2 gerichtete Fluidstrom 6a senkrecht zur Fluidzuführung 7, genauer gesagt senkrecht zu deren zylindrischen Mantel 15, ausgerichtet. Bei dem in Fig. 5b gezeigten Beispiel ist der Fluidstrom 6a von der Abtragsfront 4 bzw. vom austrittsseitigen Ende 7a der Fluidzuführung 7 weg gerichtet, d.h. der Fluidstrom 6a tritt unter einem stumpfen Ausströmwinkel (> 90°) in Bezug auf das der Abtragsfront 4 benachbarte Ende 7a der Fluidzuführung 7 aus. Werden die Austrittsöffnungen 16 unter einem stumpfen Ausström- bzw. Neigungswinkel in den Mantel 15 eingebracht, kann sowohl der Vorschub der Fluidzuführung 7 als auch der Rückfluss des Fluids 6 von der Abtragsfront 4 gezielt unterstützt werden, der bei den in Fig. 5a-d gezeigten Beispielen außerhalb der Fluidzuführung 7 erfolgt.

Bei dem in Fig. 5c dargestellten Beispiel ist die flexible Fluidzuführung 7 in Form eines doppelwandigen bzw. mehrlumigen Schlauchs 15 ausgebildet, d.h. in Form eines Schlauchs mit mehreren Kammern. Anstatt das Fluid 6 für den auf die Mantelfläche 5 der Hohlstruktur 2 ausgerichteten Fluidstrom 6a aus der Hauptkammer zu entnehmen und damit den Fluidstrom 6 zu stören, der auf die Abtragsfront 4 ausgerichtet ist, wird das Fluid 6 zur Stabilisierung der Fluidzuführung bei dem in Fig. 5c gezeigten Beispiel über eine Außen- bzw. Nebenkammer des Schlauchs 15 geführt. Am austrittsseitigen Ende 7a der Fluidzuführung 7 ist der Übergang zwischen der Außen- und der Innenkammer frei gestaltbar, sodass die Hauptfunktion der Spülung weiterhin gewährleistet ist und auf die Abtragsfront 4 optimiert werden kann.

Fig. 5d zeigt eine weitere Möglichkeit zur Realisierung der Austrittsöffnungen 16, bei der am austrittsseitigen Ende 7a der flexiblen Fluidzuführung 7 eine starre Endkappe 17 in Form einer Düse bzw. Hülse angebracht ist, in welche die Austrittsöffnungen 16 eingebracht sind, um den Fluidstrom 6a auf die Mantelfläche 5 der Hohlstruktur 2 auszurichten. Die Endkappe 17 ist im gezeigten Beispiel durch ein 3D-Druckverfahren hergestellt, genauer gesagt durch 2-Photonen-Polymerisation, welche die Herstellung sehr feiner und kleiner Komponenten ermöglicht. Dies in Fig. 5b gezeigte Lösung ist auch für den in Fig. 5c dargestellten mehrlumigen Schlauch 15 anwendbar.

Die Perforationen bzw. die Austrittsöffnungen 16 können auf unterschiedliche Weise in das flexible Material des Mantels 15 der Fluidzuführung 7 eingebracht werden. Eine Möglichkeit besteht in der Durchführung eines Laser-Ablationsprozesses, bei dem der Durchmesser der Austrittsöffnungen praktisch frei wählbar ist. **Fig. 6** zeigt eine zu diesem Zweck geeignete Vorrichtung, die einen Laserstrahlerzeuger 18 zur Erzeugung eines Laserstrahls 3 aufweist. Der Laserstrahlerzeuger 18 weist einen Scanner zur Ablenkung des Laserstrahls 3 sowie ein F-Theta-Objektiv auf, welches den Laserstrahl 3 auf den Mantel 15 der Fluidzuführung 7 fokussiert. Die Fluidzuführung 7 liegt hierbei auf einer schiefen Ebene einer Werkstückauflage 19 auf, die unter einem Winkel α zur Horizontalen ausgerichtet ist, um die Austrittsöffnung 16 mit dem gewünschten Neigungswinkel zum Mantel der Fluidzuführung 7 zu erzeugen. Das austrittsseitige Ende 7a der Fluidzuführung 7 liegt hierbei an einem an der Werkstückauflage 19 angebrachten Anschlag 20 an.

**Fig. 7a,b** zeigt eine alternative Möglichkeit zur Herstellung der Austrittsöffnungen 16 auf mechanischem Weg, genauer gesagt durch Lochen. Wie in Fig. 7a,b zu erkennen ist, wird der Mantel 15 der Fluidzuführung 7 mit Hilfe von Nadeln 21 perforiert, die an einem Kranz 24 einer Vorrichtung zur Perforation des Mantels 15 angebracht sind. Zur Fixierung des Mantels 15 im Zentrum der Vorrichtung wird eine ringförmige Halterung 22 verwendet, die an dem Kranz 24 angebracht ist und die Öffnungen zum Ausrichtung der Nadeln 21 aufweist, wie dies in Fig. 7a angedeutet ist.

Zur Fixierung des Mantels 15 ist in den Mantel 15 ein zylinderförmiges Halte-Element 23 eingeführt. Das Halte-Element 23 dient zur Erhöhung der Steifigkeit des Mantels 15 und verhindert, dass der Mantel 15 beim Durchbohren mit Hilfe der Nadeln 21 einknickt. Beim Betätigen der Vorrichtung werden die Nadeln 21 in radialer Richtung auf das Zentrum des Mantels 15 zubewegt, wobei der Mantel 15 perforiert wird und die Austrittsöffnungen 16 gebildet werden. Es versteht sich, dass der Kranz 24 mit den Nadeln 21 derart ausgeführt sein kann, dass die Austrittsöffnungen 16 mit einem geeigneten Winkel in den Mantel 15 der flexiblen Fluidzuführung 7 eingebracht werden. Es versteht sich weiterhin, dass an Stelle von Nadeln 21 auch andere mechanische Werkzeuge, beispielsweise Schneiden oder dergleichen, verwendet werden können, um die Austrittsöffnungen 16 in dem Mantel 15 der flexiblen Fluidzuführung 7 zu bilden.

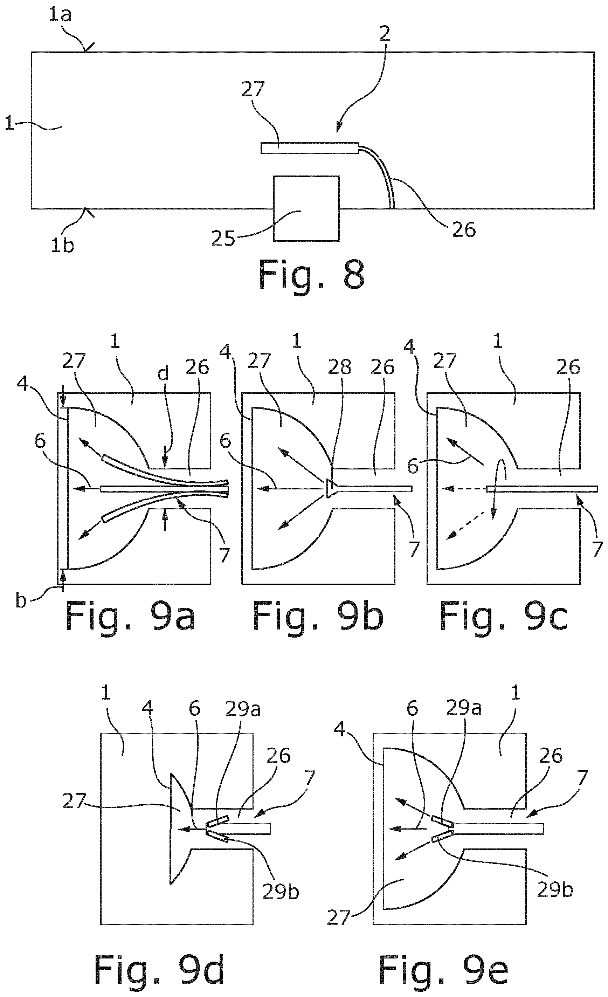

**Fig. 8** zeigt ein Substrat 1 mit einer Hohlstruktur 2, die anders als die weiter oben beschriebenen Hohlstrukturen 2 nicht zur Durchströmung mit einem Temperierfluid vorgesehen ist, sondern zum Dämpfen von mechanischen Spannungen dient, die von einem Anbauteil 25 in Form einer Buchse auf das Substrat 1 ausgeübt werden. Das Anbauteil 25 in Form der Buchse ist an einer Rückseite 1b des Substrats 1 angeklebt. Die mechanischen Spannungen sollen nicht von der Rückseite 1b des Substrats 1 auf eine Vorderseite 1a des Substrats 1 durchdrücken, an der eine reflektierende Beschichtung aufgebracht wird, um den EUV-Spiegel zu bilden.

Zu diesem Zweck ist es günstig, wenn die Hohlstruktur 2 das Anbauteil 25 in einer Draufsicht auf die Vorderseite 1a des Substrats 1 vollständig verdeckt. Um dies zu erreichen, wird ein großvolumiger Hohlraum 27 benötigt, der in einer Ebene parallel zur Vorderseite 1a des Substrats 1 eine Fläche aufweist, die zumindest der Fläche des Anbauteils 25 entspricht. Die Erstreckung des Hohlraums 27 senkrecht zur Vorderseite 1a kann hingegen gering gewählt werden, d.h. der Hohlraum 27 kann eine verhältnismäßig geringe Höhe aufweisen, wie dies in Fig. 8 angedeutet ist.

Zur Realisierung eines großvolumigen Hohlraums 27 in einem monolithischen Substrat 1 wird ein Zugang 26 benötigt, der diesen mit einer Seite des Substrats 1 verbindet, bei der es sich im gezeigten Beispiel um die Rückseite 1b des Substrats 1 handelt. Bei dem Zugang 26 handelt es sich im gezeigten Beispiel um einen kanalförmigen Zugang 26, der einen vergleichsweise geringen Durchmesser und einen im gezeigten Beispiel zylindrischen Querschnitt aufweist.

Sowohl der kanalförmige Zugang 26 als auch der großvolumige Hohlraum 27 werden durch das weiter oben beschriebene Verfahren zur materialabtragenden Bearbeitung realisiert. Hierbei muss der vergleichsweise geringe Querschnitt bzw. Durchmesser des kanalförmigen Zugangs 26 auf den vergleichsweise großen Querschnitt des großvolumigen Hohlraums 27 aufgeweitet werden. Im gezeigten Beispiel weist der Zugang 26 einen Durchmesser d von ca. 2 mm auf und die maximale Breite b des großvolumigen Hohlraums 27 liegt bei ca. 10 mm. Die Höhe des Querschnitts muss hingegen nur geringfügig angepasst werden. Die Breite b der Abtragsfront 4 bei der Bildung des Hohlraums 27 nimmt ausgehend von dem Zugang 26 zu, bis die maximale Breite b des Hohlraums 27 erreicht ist.

Auch bei dem in Fig. 8 gezeigten Beispiel wird der Abtragsfront 4 ein Fluid 6 zugeführt, um diese zu spülen und um Ablationsprodukte von der Abtragsfront 4 abzuführen und aus der Hohlstruktur 2 zu entfernen. Für die Spülung des großvolumigen Hohlraums 27 mit einer entsprechend großflächigen Abtragsfront 4 sind die typischerweise verwendeten Fluidzuführungen in Form von flexiblen Schläuchen nicht ohne weiteres geeignet.

**Fig. 9a****-e** zeigen Fluidzuführungen 7, die modifiziert wurden, um die Spülung einer solchen Abtragsfront 4 zu ermöglichen, ohne hierbei Schädigungen des Substrats 1 zu erzeugen.

Bei dem in Fig. 9a gezeigten Beispiel weist die Fluidzuführung 7 mehrere flexible Fluidleitungen auf, um der Abtragsfront 4 das Fluid 6 zuzuführen. Wie in Fig. 9a zu erkennen ist, werden die flexiblen Fluidleitungen in dem kanalförmigen Zugang 26 in der Art eines Bündels geführt. Für die Spülung der Abtragsfront 4 ragen die flexiblen Fluidleitungen mit ihren austrittsseitigen Enden in den großvolumigen Hohlraum 27 hinein und sind auf unterschiedliche Positionen an der Abtragsfront 4 ausgerichtet, die gleichzeitig mit dem Fluid 6 gespült werden. Die austrittsseitigen Enden der flexiblen Fluidleitungen erstecken sich hierbei ausgehend von dem kanalförmigen Zugang 26 fächerförmig in den großvolumigen Hohlraum 27.

Bei dem in Fig. 9b gezeigten Beispiel weist die Fluidzuführung 7 an ihrem austrittsseitigen Ende eine Flachstrahldüse 28 auf, um der Abtragsfront 4 das Fluid 6 zuzuführen. Die Flachstrahldüse 28 ist in Form eines Aufsatzes an einer flexiblen Fluidleitung der Fluidzuführung 7 angebracht. Mittels der Flachstrahldüse 28 kann das Fluid 6 homogen in dem großvolumigen Hohlraum 27 verteilt werden, um die Abtragsfront 4 über ihre gesamte Breite b möglichst homogen zu spülen, wenn diese in ausreichendem Abstand von der Abtragsfront 4 angeordnet ist, wie dies in Fig. 9b der Fall ist.

Alternativ zu einer Flachstrahldüse 28 kann die Fluidzuführung 7 eine einstellbare Düse aufweisen, d.h. eine Düse, die es ermöglicht, die Strahleigenschaften des aus der Düse ausströmenden Fluids 6 zu verändern. Für die Bildung des kanalförmigen Zugangs 26 und des großvolumigen Hohlraums 27 kann in diesem Fall ein- und dieselbe Fluidzuführung 7 verwendet werden, sofern der Öffnungswinkel des ausströmenden Fluids 6 in dem kanalförmigen Zugang 26 vergleichsweise klein und in dem großvolumigen Hohlraum 27 vergleichsweise groß gewählt wird. In diesem Fall kann in dem kanalförmigen Zugang 26 ein konzentrierter Fluidstrom erzeugt werden, der nach vorne ausgerichtet ist und in dem großvolumigen Hohlraum 27 kann eine breite Spülung des Volumens erfolgen. Als variable Düse kann beispielsweise ein variabler Spülkopf verwendet werden, wie er auch in Form von Spritzen für die Bewässerung von Gärten oder dergleichen zum Einsatz kommt.

Fig. 9c zeigt eine Fluidzuführung 7, deren in den großvolumigen Hohlraum 27 eingeführtes austrittsseitiges Ende bewegt wird, um das Fluid 6 unterschiedlichen Positionen der Abtragsfront 4 zuzuführen. Bei dem in Fig. 9c gezeigten Beispiel wird das austrittsseitige Ende der Fluidzuführung 7, ggf. mit der weiter oben beschriebenen Düse, innerhalb des großvolumigen Hohlraums 27 bewegt und führt hierbei definierte oszillierende Bewegungen aus, um die gesamte Abtragsfront 4 zu spülen. Durch die definierte oszillierende Bewegung wird jede Position der Abtragsfront 4 von Zeit zu Zeit gespült, es findet aber keine konstante Spülung der gesamten Abtragsfront 4 mit dem Fluid 6 statt. Im gezeigten Beispiel, bei dem der Querschnitt des Hohlraums 27 eine deutlich größere Breite b als Höhe aufweist, kann die oszillierende Bewegung in einer Ebene erfolgen, es ist aber auch möglich, dass das austrittsseitige Ende der Fluidzuführung 7 in dem Hohlraum 27 eine dreidimensionale oszillierende Bewegung ausführt, um nacheinander unterschiedliche Positionen der Abtragsfront 4 zu spülen.

Fig. 9d und Fig. 9e zeigen eine Fluidzuführung 7, die an ihrem austrittsseitigen Ende zwei Austrittseinheiten 29a,b für das Fluid 6 aufweist, die beim Einführen in den Hohlraum 27 in eine ausgefahrene Stellung bewegt, genauer gesagt verschwenkt, werden, um der Abtragsfront 4 das Fluid 6 zuzuführen. Bei dieser Variante befinden sich die Austrittseinheiten 29a,b während der Anordnung des austrittsseitigen Endes der Fluidzuführung 7 in dem kanalförmigen Zugang 26 (vgl. Fig. 9d) in einer zurückgezogenen Stellung und werden erst dann in die ausgefahrene Stellung bewegt, genauer gesagt verschwenkt, wenn sich das austrittsseitige Ende der Fluidzuführung 7 innerhalb des großvolumigen Hohlraums 27 befindet (vgl. Fig. 9e).

Die Austrittseinheiten 29a,b sind als Aufsätze ausgebildet, die an dem austrittsseitigen Ende der Fluidzuführung 7 angebracht sind. In der in Fig. 9d gezeigten zurückgezogenen Stellung tritt kein Fluid 6 aus den Austrittseinheiten 29a,b aus, d.h. in dem kanalförmigen Zugang wird die Fluidzuführung 7 wie eine herkömmliche Fluidleitung verwendet, an deren austrittsseitigem Ende stirnseitig das Fluid 6 austritt. Erst wenn das austrittsseitige Ende der Fluidzuführung 7 in den großvolumigen Hohlraum 27 eingeführt wurde, werden die Austrittseinheiten 29a,b in die ausgefahrene Stellung bewegt und der Abtragsfront 4 wird zusätzlich über die Austrittseinheiten 29a,b das Fluid 6 zugeführt, d.h. das Spülverhalten der Fluidzuführung 7 verändert sich.

Die Austrittseinheiten 29a,b sind in der ausgefahrenen Stellung unter einem spitzen Ausströmwinkel zum Zentrum der Fluidzuführung 7 ausgerichtet, um einen größeren Teil der Abtragsfront 4 zu spülen, als dies ohne die Verwendung der Austrittseinheiten 29a,b der Fall wäre. Abhängig vom verwendeten Mechanismus für die Bewegung zwischen der zurückgezogenen und der ausgefahrenen Stellung ist es möglich, den Austrittswinkel der Austrittseinheiten 29a,b zu verändern, um unterschiedliche Positionen der Abtragsfront 4 zu spülen. Für den Fall, dass der Mechanismus keine Bewegung von der ausgefahrenen Stellung zurück in die zurückgezogene Stellung ermöglicht, ist ggf. kein Herausziehen der Fluidzuführung 7 aus dem Hohlraum 27 bzw. aus der Hohlstruktur 2 möglich, ohne die Austrittseinheiten 29a,b bzw. die Fluidzuführung 7 zu beschädigen, d.h. diese sind ggf. nicht wiederverwendbar.

Bei allen weiter oben beschriebenen Varianten kann die Spülung der Abtragsfront 4 mit einer Prozessüberwachung gekoppelt werden, um Fehler zeitnah detektieren und ggf. beheben zu können.

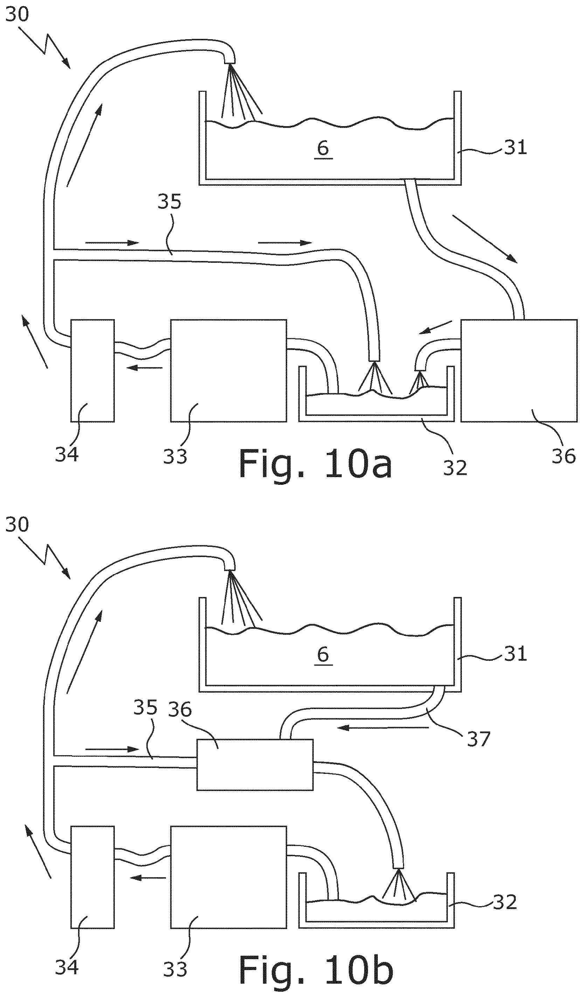

**Fig. 10a,b** zeigen eine Vorrichtung 30 zur Zuführung des für die materialabtragende Bearbeitung verwendeten Fluids 6 zu einem Prozessbecken 31 und zum Abführen des Fluids 6 aus dem Prozessbecken 31. Bei dem Fluid 6 handelt es sich um Wasser, das nachfolgend auch als Prozesswasser 6 bezeichnet wird. Beim materialabtragenden Bearbeiten wird das weiter oben beschriebene Substrat 1 in das Prozessbecken 31 gelegt und taucht hierbei ganz oder ggf. teilweise in das Prozesswasser 6 ein.

Für die Förderung des Prozesswassers 6 zu dem Prozessbecken 31 weist die Vorrichtung 30 eine erste Pumpe 33 auf. Die erste Pumpe 33 entnimmt das Prozesswasser 6 aus einem Tank 32 und pumpt dieses über einen Filter 34, ggf. in Kombination mit einer Kühlung, in das Prozessbecken 31. Ein erheblicher Anteil des Prozesswassers 6, der beispielsweise in der Größenordnung von 95 % liegen kann, wird über eine Bypass-Leitung 35 wieder zurück in den Tank 32 gepumpt.

Beim materialabtragenden Bearbeiten nimmt das Prozesswasser 6 in dem Prozessbecken 31 Ablationsprodukte des Substrats 1 auf. Um die Ablationsprodukte sowie einen Teil des Prozesswassers 6 aus dem Prozessbecken 31 abzuführen, weist die Vorrichtung 30 von Fig. 10a eine zweite Pumpe 36 in Form einer Peristaltik-Pumpe auf, welche das Prozesswasser 6 aus dem Prozessbecken 31 in den Tank 32 zurückführt.

Die Rückführung des Prozesswassers 6 aus dem Prozessbecken 31 in den Tank 32 ist jedoch problematisch, da das Prozessbecken 31 ggf. leer läuft und dadurch Luft in das Schlauchsystem der zweiten Pumpe 36 gesaugt wird. Zudem können bei einer zweiten Pumpe 36 in Form einer Peristaltik-Pumpe die beim abtragenden Bearbeiten in das Prozesswasser 6 eingebrachten Partikel, insbesondere in Form von Glaspartikeln, den für die Rückführung verwendeten flexiblen Schlauch zerstören. Wird dieser Defekt nicht rechtzeitig festgestellt, führt dies dazu, dass das Prozessbecken 31 überläuft und ggf. die Vorrichtung 30 beschädigt wird. Zu einem Überlaufen des Prozessbeckens 31 kann es auch kommen, wenn die erste Pumpe 33 aktiv ist und aus einem beliebigen Grund die zweite Pumpe 36 nicht aktiv ist.

Um die oben beschriebenen Probleme zu vermeiden, ist bei der in Fig. 10b gezeigten Vorrichtung 30 die zweite Pumpe 36 in die Bypass-Leitung 35 für die Rückführung eines Teils des von der ersten Pumpe 33 geförderten Prozesswassers 6 integriert und als Wasserstrahlpumpe bzw. als Venturipumpe ausgebildet. Die zweite Pumpe 36 in Form der Wasserstrahlpumpe dient zum Ansaugen des Prozesswassers 6 aus dem Prozessbecken 31 über ein Ansaugrohr 37. Die zweite Pumpe 36 in Form der Wasserstrahlpumpe in der Bypass-Leitung 35 ist an die Pumpleistung der ersten Pumpe 34 gekoppelt. Daher kann der Fall nicht auftreten, dass die erste Pumpe 34 läuft, aber die zweite Pumpe 36 nicht aktiv ist. Ein Überlaufen des Prozesswassers 6 in dem Prozessbecken 31 kann daher nur in dem Fall eintreten, dass der Ansaugschlauch 37 oder ein Rückführungsschlauch der zweiten Pumpe 36 verstopft ist. Ein weiterer Vorteil der zweiten Pumpe 36 in Form der Wasserstrahlpumpe in der Bypass-Leitung 35 besteht darin, dass diese nicht separat angesteuert werden muss. Für die hier beschriebene passive Rückführung des Prozesswassers 6 wird eine Bypass-Leitung 35 mit einem ausreichend großen Durchflussvolumen benötigt, um das Prozesswasser 6 aus dem Prozessbecken abzuführen.

## Patentansprüche

1. Verfahren zum Spülen einer Abtragsfront (4) an einer durch materialabtragende Bearbeitung gebildeten Hohlstruktur (2) in einem Werkstück (1), bevorzugt in einem Substrat für einen EUV-Spiegel, umfassend:
Zuführen eines Fluids (6) zu der Abtragsfront (4) mittels einer bevorzugt flexiblen Fluidzuführung (7),
**dadurch gekennzeichnet,**
**dass** die Fluidzuführung (7) zum Zuführen des Fluids (6) zu der Abtragsfront (4) und/oder zum Abführen des Fluids (6) von der Abtragsfront (4) mindestens eine in mindestens einer Raumrichtung periodische Außenstruktur, bevorzugt eine helixförmige Außenstruktur (9a,b, 9; 9a-e), aufweist.

2. Verfahren nach Anspruch 1, bei dem die Fluidzuführung (7) einen bevorzugt massiven Kern (8) aufweist, der von der mindestens einen periodischen Außenstruktur (9a, 9b) umgeben ist.

3. Verfahren nach Anspruch 2, bei dem der Kern (8) von mindestens zwei periodischen Außenstrukturen (9a, 9b) umgeben ist, mit denen das Fluid (6) der Abtragsfront (4) zugeführt und von der Abtragsfront (4) abgeführt wird.

4. Verfahren nach Anspruch 3, bei dem helixförmigen Außenstrukturen (9a, 9b) stegförmig ausgebildet sind und mindestens einen ersten wendelförmigen Kanal (10), über den das Fluid (6) der Abtragsfront (4) zugeführt wird, von mindestens einem zweiten wendelförmigen Kanal (11) trennen, über den das Fluid (6) von der Abtragsfront (4) abgeführt wird.

5. Verfahren nach Anspruch 4, bei dem die wendelförmigen Kanäle (10, 11) an der Außenseite der Fluidzuführung (7) offen sind und bevorzugt beim Zuführen des Fluids (6) zu der Abtragsfront (4) und beim Abführen des Fluids (6) von der Abtragsfront (4) seitlich von einer Mantelfläche (5) der Hohlstruktur (2) begrenzt werden.

6. Verfahren nach Anspruch 3, bei dem die periodischen Außenstrukturen (9a, 9b) als Fluidleitungen ausgebildet sind, durch die das Fluid (6) der Abtragsfront (4) zugeführt und von der Abtragsfront (4) abgeführt wird.

7. Verfahren nach Anspruch 2, bei dem das Fluid (6) der Abtragsfront (4) in dem Kern (8) zugeführt wird und das Fluid (6) von der Abtragsfront (4) mittels der mindestens einen periodischen Außenstruktur (9, 9a-e) abgeführt wird, oder umgekehrt.

8. Verfahren nach Anspruch 7, bei dem die mindestens eine periodische Außenstruktur (9, 9a-e) stegförmig ausgebildet ist und das Fluid (6) in mindestens einem wendelförmigen Kanal (13a-e) zwischen dem Kern (6) der Fluidzuführung (7) und einer Mantelfläche (5) der Hohlstruktur (2) von der Abtragsfront (4) abgeführt wird, wobei bevorzugt zum Abführen des Fluids (6) die Fluidzuführung (7) in der Hohlstruktur (2) gedreht wird.

9. Verfahren nach einem der vorhergehenden Ansprüche, bei dem die Fluidzuführung (7) der Abtragsfront (4) mittels eines Gewindeantriebs (14) nachgeführt wird, der an der mindestens einen helixförmigen Außenstruktur (9, 9a-e) angreift.

10. Vorrichtung zum Spülen einer Abtragsfront (4) an einer durch materialabtragende Bearbeitung gebildeten Hohlstruktur (2) in einem Werkstück (1), bevorzugt in einem Substrat für einen EUV-Spiegel, umfassend:
eine bevorzugt flexible Fluidzuführung (7) zur Zuführung eines Fluids (6) zu der Abtragsfront (4),
**dadurch gekennzeichnet,**
**dass** die Fluidzuführung (7) zum Zuführen des Fluids (6) zu der Abtragsfront (4) und/oder zum Abführen des Fluids (6) von der Abtragsfront (4) mindestens eine in mindestens einer Raumrichtung periodische Außenstruktur, bevorzugt eine helixförmige Außenstruktur (9a,b, 9; 9a-e), aufweist.

11. Vorrichtung nach Anspruch 10, bei der die Fluidzuführung (7) einen bevorzugt massiven Kern (8) aufweist, der von der mindestens einen periodischen Außenstruktur (9a, 9b) umgeben ist.

12. Vorrichtung nach Anspruch 11, bei welcher der Kern (8) von mindestens zwei periodischen Außenstrukturen (9a, 9b) umgeben ist, die zur Zuführung des Fluids (6) zu der Abtragsfront (4) und zum Abführen des Fluids (6) von der Abtragsfront (4) ausgebildet sind.

13. Vorrichtung nach Anspruch 12, bei welcher die helixförmigen Außenstrukturen (9a, 9b) stegförmig ausgebildet sind und mindestens einen ersten wendelförmigen Kanal (10), der zur Zuführung des Fluids (6) zur Abtragsfront (4) dient, von mindestens einem zweiten wendelförmigen Kanal (11) trennen, der zum Abführen des Fluids (6) von der Abtragsfront (4) dient, wobei bevorzugt die wendelförmigen Kanäle (10, 11) an der Außenseite der Fluidzuführung (7) offen sind.

14. Vorrichtung nach Anspruch 12, bei welcher die periodischen Außenstrukturen (9a, 9b) als Fluidleitungen ausgebildet sind, die zur Zuführung des Fluids (6) zu der Abtragsfront (4) und zum Abführen des Fluids (6) von der Abtragsfront (4) dienen.

15. Vorrichtung nach Anspruch 11, die ausgebildet ist, das Fluid (6) der Abtragsfront (4) über den Kern (8) zuzuführen und die ausgebildet ist, das Fluid (6) von der Abtragsfront (4) mittels der mindestens einen periodischen Außenstruktur (9, 9a-e) abzuführen, oder umgekehrt, wobei die mindestens eine periodische Außenstruktur (9, 9a-e) bevorzugt stegförmig ausgebildet ist, um das Fluid (6) in mindestens einem wendelförmigen Kanal (13a-e) zwischen dem Kern (6) der Fluidzuführung (7) und einer Mantelfläche (5) der Hohlstruktur (2) von der Abtragsfront (4) abzuführen, wobei die Vorrichtung insbesondere ausgebildet ist, zum Abführen des Fluids (6) die Fluidzuführung (7) in der Hohlstruktur (2) zu drehen.

16. Vorrichtung nach einem der Ansprüche 10 bis 15, weiter umfassend:
einen Gewindeantrieb (14), der ausgebildet ist, an der mindestens einen helixförmigen Außenstruktur (9, 9a-e) anzugreifen, um die Fluidzuführung (7) der Abtragsfront (4) nahzuführen.
